# EUROPEAN PATENT APPLICATION

(11) **EP 2 474 390 A1**
(43) Date of publication of application: **11.07.2012**
(21) Application number: 11150348.8
(22) Date of filing: 06.01.2011
(51) Int. Cl.: B24B 55/12, B24B 57/00, B28D 5/00, C04B 33/132, C01B 33/037, B01D 21/00

(54) **Method and Apparatus for Recycling and Treating Waste Liquid that has been used in Cutting Mono Silicon**

(71) Applicant: Guo, Tzer-Huang, Keelung City (TW)
(72) Inventor: Guo, Tzer-Huang, Keelung City (TW)
(74) Representative: Baldwin, Mark

(57) **Abstract**

A recycling and treatment method of mono silicon's cutting waste liquid, which includes the following steps: 1. treat the waste liquid with diluted hydrochloric acid, then stir into an easy-to-flow mixture; 2. heat up the mixture for solid-liquid separation, such that water and polyethylene glycol are evaporated, condensed and dehydrated to recover the polyethylene glycol, and obtain coarse solid mixture of silicon carbide and silicon; 3. obtain the secondary solid mixture of silicon carbide and silicon by secondary cleaning of the coarse solid mixture with water; 4. recycle silicon and silicon carbide by treatment with the mixed acid solution of HN0₃ +HF. This method features simplicity, ease of operation, low cost and high recycling rate, with the overall yield of cutting waste liquid up to 26-46%; moreover, the quality of recycled products can reach or approach the standard indexes, so they can be directly used in solar battery production.

## Description

### BACKGROUND OF INVENTION

### 1. Field of the Invention

The present invention relates to a recycling and treatment method for waste cutting fluid for cutting mono silicon and apparatus therefor.

### 2. Description of Related Art

With increasing energy shortage and pollution aggravation, various countries pay much attention to clean energy, driving the booming research and development of solar batteriesy in the world. The extensive utilization of solar batteries has contributed to rapid growth of mono silicon as a main material of solar batteries. Mono silicon wafers for solar batteries are produced by cutting and processing mono silicon sticks. Considerable waste liquid is generated since a coolant/ cutting fluid must be used in the cutting process. At present, the cutting fluid commonly used is a mixture containing polyethylene glycol, silicon carbide, triethavolamine, saponified fluid and kerosene, with its COD value obviously exceeding wastewater discharge standard. So, discharge of such used/waste cutting fluid is strictly prohibited as per environmental protection requirements. There is not an appropriate method of waste liquid recycling and treatment for the waste cutting fluid so the domestic producers have to stockpile a great deal of waste liquid, resulting in a serious problem for themselves. Therefore, there is an urgent demand to seek for a simple and effective method of recycling and treatment of waste mono silicon cutting fluid, so as to recover polyethylene glycol, silicon carbide and silicon. The recycling and treatment of the waste cutting fluid not only solves environmental problems, but also has significant economic benefits.

### SUMMARY OF THE INVENTION

The present invention provides a recycling and treatment method for waste cutting fluid forcutting mono silicon comprising:
1. Put mono silicon's cutting waste liquid substantially without kerosene into a spray stirrer, and add diluted hydrochloric acid with a concentration of 0.0001-0.4 mol by a ratio of 1kg waste liquid to 100-500 ml hydrochloric acid solution; then stir circularly 10-30 min to obtain the preliminary mixture, discharge into a spray mixer, then mix circularly 10-30 min with temperature rise to 30-50°C, and finally obtain the secondary mixture and discharge it;
   (the producer typically recovers the waste liquid from storage in a barrel by means of decantation, so the kerosene contained in waste liquid is typically substantially removed)
   Mono silicon's cutting waste liquid is a kind of highly viscous material containing solid particles, making it difficult for flow, transportation and processing. In this invention, the waste liquid is processed by diluted hydrochloric acid, and alkaline substances contained in the waste liquid, such as triethavolamine and saponified fluid, are removed by salt generated from neutralization, so as to obviously decrease viscosity of the waste liquid. Then, through circulatory spraying stirring and mixing in the spray stirrer and mixer, the waste liquid is turned into a kind of homogeneous mixture for easy flow, transportation and processing.
   The spray stirrer enables stirring and reaction of acid and viscous liquid by circulatory spraying and stirring. The mixture is sprayed from the first spray channel in the spray stirrer, and mixed in a bigger cycle; then, as a negative pressure is formed in the nozzle chamber, the mixture is fed into the nozzle chamber through a liquid flow hole and then mixed in a smaller cycle, thus increasing greatly the stirring and reaction effect.
   The spray mixer is structured in a way that a spray channel and deflector are set in the sprayer, and a turbulence channel set in the spray channel, with Reynolds number Re (ratio of inertia force to internal friction) of liquid flow over 3000. Due to the turbulent flow of liquids, molecular impact and friction of mixture in the turbulence channel could further mix the mixture and make the particles finer. With the setting of a deflector, the mixture flows in a smaller range, bringing about better mixing and reaction effect.
2. Secondary mixture discharged from spray mixer is fed into a solid-liquid separator, and heated by an electric heating plate of 50-80°C, so as to evaporate the water vapor and Polyethylene glycol. Then, mixed solution of water and Polyethylene glycol is obtained by cooing in the first condenser. Next, the mixed solution is fed into the spray dehydrator, circularly sprayed and dehydrated for 15-40 min at 40-80°C. Polyethylene glycol can be recovered by discharging water vapor from the spray dehydrator. Coarse solid mixture of silicon carbide and silicon is discharged from the bottom of solid-liquid separator;
   Operating principle of spray dehydrator: the liquid flow of water and polyethylene glycol flows turbulently in the turbulence channel; molecular impact and friction in the turbulence channel makes the molecular particle of water and polyethylene glycol finer; while temperature rises gradually in the circulatory spraying and mixing process, water molecule of lower boiling point is vaporized to realize dehydration of polyethylene glycol.
3. Coarse solid mixture of silicon carbide and silicon is fed into the first spray cleaner, then circularly sprayed and cleaned for 10-30 min by adding water equivalent to 10-20% of coarse solid mixture; after the temperature rises to 40-80°C, the cleaned mixture is put into the first shaking table to separate and remove "shell residues" of smaller specific weight, thus obtaining the preliminary solid mixture of silicon carbide and silicon. Then, the solid mixture is fed into the second spray cleaner for the same circulatory spraying and cleaning process, and next put into the second shaking table to separate and remove again the "shell residues", thus obtaining the secondary solid mixture of silicon carbide and silicon;
   Neutralized salt and other impurities contained in coarse solid mixture of silicon carbide and silicon are covered closely onto the powders of silicon carbide and silicon in "shell" form, making it difficult for removal. Through secondary water cleaning by the spray cleaner and repetitive circulatory stirring and cleaning, molecular impact and friction between materials and water occurs, so that the particle is refined and the "shell" is fractured and broken off. Then, the silicon carbide and silicon are separated with the "shell residues" by the shaking table due to different specific gravity, and next the separated shell residues are recovered as fertilizer.
4. Secondary solid mixture of silicon carbide and silicon is fed into a reactor to separate and recover silicon carbide and silicon via reactive generation of fluosilicic acid. The mixed acid solution of 5% HNO₃ and 30% HF, with a volume ratio of HNO₃: HF=1: 5, is added into solid mixture of silicon carbide and silicon by a ratio of 1-1.5 kg mixed acid solution to 1kg solid mixture. Through 10-30 min circulatory spraying and stirring, the fluosilicic acid solution is vaporized when temperature rises to the counterflow temperature, and then cooled by the second condenser to recover the transparent fluosilicic acid solution. After being dried up by normal procedures, fluosilicic acid solution is processed into mono silicon for silicon recovery. Residual silicon carbide and acid solution in the reactor is filtered and flushed with 5-10wt% alkali solution and water until pH reaches 7-7.5, and then dried up to recover silicon carbide. Said alkali solution can be prepared by Na0H KOH or Na₃C0₃.

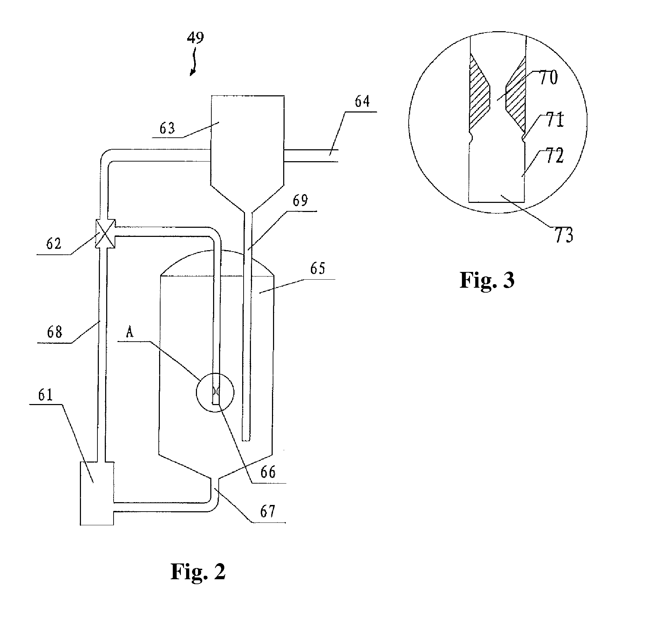

The device of the present invention used for the recycling and treatment method of mono silicon's cutting waste liquid, comprising: a spray stirrer 49, with its structure shown in FIGS. 2 and 3, mainly consisting of: first mixing kettle 65, first feed tank 63, first spray channel 66, first diaphragm pump 61, first tee valve 62 and first discharge pipe 64. A first feed pipe 69 at lower part of said first feed tank 63 is mounted onto the upper cover of the first mixing kettle 65, and also extended into the first mixing kettle 65. Said first spray channel 66 consists of interconnected nozzle 70, nozzle chamber 72 and first nozzle exit 73; a liquid flow orifice 71 is set separately onto both sides of the wall of nozzle chamber 72, with the diameter of nozzle about 3-4 mm. Said first diaphragm pump 61 is arranged on the first connecting pipe 68 between the first tee valve 62 and the first discharge hole 67 at bottom of the first mixing kettle 65, while the first discharge pipe 64 is connected with the first tee valve 62.

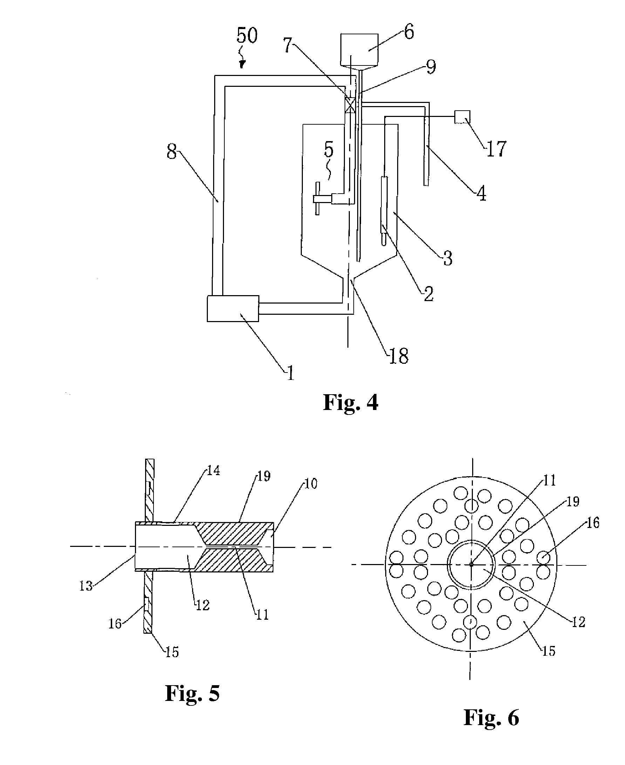

A spray mixer 50, connected with the spray stirrer via the first discharge pipe 64 of the spray stirrer 49. Referring to FIGS. 4 ∼ 6, the structure of the spray mixer 50 (an application of the utility model has claimed, with the application No. 200620039272.3) mainly consists of: a mixing kettle 3, feed tank 6, sprayer 5, diaphragm pump 1, resistance thermometer sensor 2, tee valve 7 and discharge pipe 4. The feed pipe 9 at lower part of said feed tank 6 is mounted onto the upper cover of the mixing kettle 3, and also extended into the mixing kettle 3. Said sprayer 5 consists of: a spray channel 19 and deflector 15. The spray channel 19 consists of interconnected nozzle inlet 10, turbulence channel 11, mixing chamber 12 and nozzle exit 13. The nozzle inlet 10 is of a funnel shape, and the turbulence channel 11 has a diameter of 1.2-3 mm; a liquid flow hole 14 is set separately onto both sides of the wall of the mixing chamber 12. The deflector 15 is vertically arranged on the spray channel 19, and located between the liquid flow hole 14 and nozzle exit 13; small holes 16 of 1-3 mm are distributed onto the deflector 15, with the aperture ratio of the deflector 15 up to 60-80%. Said diaphragm pump is arranged on the connecting pipe 8 between the tee valve 7 and discharge hole 18 at bottom of the mixing kettle 3, while the discharge pipe 4 is connected with the tee valve 7. And, said resistance thermometer sensor 2 is located fixedly into the mixing kettle 3, and connected with the temperature indicator 17 by wiring the upper cover of the mixing kettle 3.

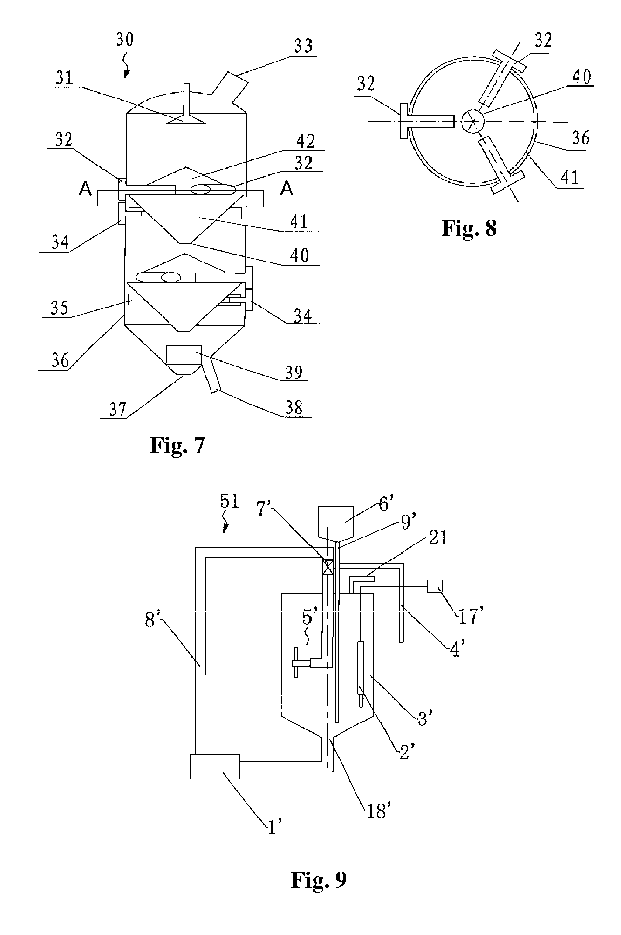

A solid-liquid separator 30, referring to FIGS. 7 ∼ 8, mainly consists of: a sprinkler head 31, steam pipe 33, tapered plate 42, funneled plate 41 and solid outlet 37. The discharge pipe 4 of the spray mixer is connected with the sprinkler head 31 set at the center of top cover of the solid-liquid separator 30; in the solid-liquid separator 30, two electric heating plates are fastened symmetrically onto the outer wall 36; every electric heating plate is structured in a way that: a tapered plate 42 is located at the upper part, and a funneled plate 41 and hole 40 located at lower part; the diameter of the funneled plate 41 is bigger than that of the tapered plate 42. The tapered plate 42 is fastened onto three locating pins 32 arranged in 120°, all of which are fixed onto the outer wall 36. The funneled plate 41 is fastened onto the tray 35, which is fixed onto the outer wall 36 via fix screw 34. A steam pipe 33 is set on the top cover, and a solid outlet 37 at the bottom; a baffle plate 39 is set on the periphery of the solid outlet 37, and a liquid outlet 38 also set at the bottom.

A spray dehydrator 51 (see FIG. 9; for the sprayer 5' in FIG. 9, see also FIGS. 5 ∼ 6), which is structured almost the same way with the spray mixer 50; but a drain pipe 21 is set on its top cover; in this device, the solid-liquid separator 30 is connected with the spray dehydrator 51 via the first condenser.

The spray dehydrator 51 structurally comprises: a mixing kettle 3', feed tank 6', sprayer 5', diaphragm pump 1', resistance thermometer sensor 2', tee valve 7', discharge pipe 4' and drain pipe 21. The feed pipe 9' at lower part of said feed tank 6' is mounted onto the upper cover of the mixing kettle 3', and also extended into the mixing kettle 3'. A drain pipe 21 is set on the upper cover of the mixing kettle 3'. Said sprayer 5' consists of a spray channel 19' and deflector 15'. The spray channel 19' consists of interconnected nozzle inlet 10', turbulence channel 11', mixing chamber 12' and nozzle exit 13'. The nozzle inlet 10' is of a funnel shape, and the turbulence channel 11' has a diameter of 1.2-3 mm; a liquid flow hole 14' is set separately onto both sides of the wall of the mixing chamber 12'. The deflector 15' is vertically arranged on the spray channel 19', and located between the liquid flow hole 14' and nozzle exit 13'; small holes 16' of 1-3 mm are distributed onto the deflector 15', with the aperture ratio of the deflector 15' up to 60-80%. Said diaphragm pump 1' is arranged on the connecting pipe 8' between the tee valve 7' and discharge hole 18' at bottom of the mixing kettle 3', while the discharge pipe 4' is connected with the tee valve 7'. And, said resistance thermometer sensor 2' is located fixedly into the mixing kettle 3', and connected with the temperature indicator 17' by wiring the upper cover of the mixing kettle 3'.

A first spray cleaner, connected with the solid outlet 37 of the solid-liquid separator 30. The first spray cleaner is structured in the same way with the spray mixer 50, namely, the first spray cleaner is connected with the first shaking table, the second spray cleaner and the second shaking table; of which the second spray cleaner is structured in the same way with the first spray cleaner, and also connected with a reactor 52.

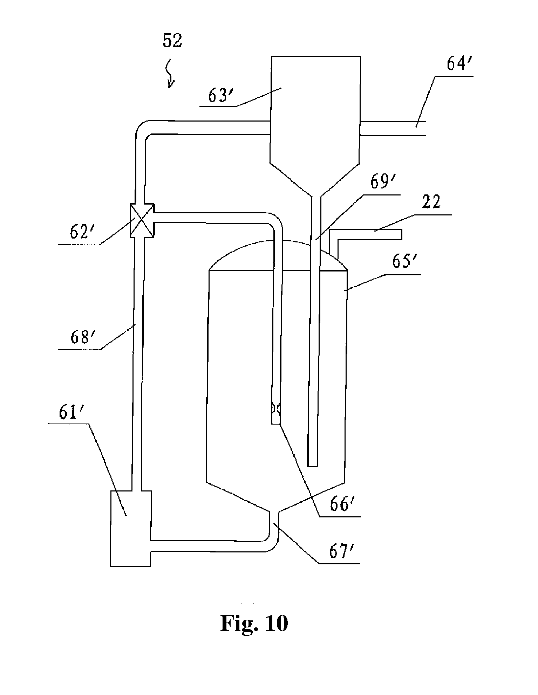

A reactor 52 (see FIG. 10; for the enlarged view of spray channel 66' in FIG. 10, see FIG. 3) is structured almost the same way with the spray stirrer 49, but a steamed liquid pipe 22 is set on its top cover; in this device, the steamed liquid pipe 22 is connected with the second condenser.

The reactor 52 structurally comprises: a second mixing kettle 65', second feed tank 63', second spray channel 66', second diaphragm pump 61', second tee valve 62', second discharge pipe 64' and steamed liquid pipe 22. The second feed pipe 69' at lower part of said second feed tank 63' is mounted onto the upper cover of the second mixing kettle 65', and also extended into the second mixing kettle 65'. A steamed liquid pipe 22 is also set on the upper cover of the second mixing kettle 65'. Said second spray channel 66' consists of interconnected second nozzle 70', second nozzle chamber 72' and second nozzle exit 73'. A liquid flow orifice 71' is set separately onto both sides of the wall of the nozzle chamber 72', while the second nozzle has a diameter of 3-4mm. Said second diaphragm pump 61' is arranged on the second connecting pipe 68' between the second tee valve 62' and second discharge hole 67' at bottom of the second mixing kettle 65', while the second discharge pipe 64' is connected with the second tee valve 62'.

Through actual implementation and operation, the present invention's recycling and treatment method of mono silicon's cutting waste liquid is characterized by that: simplicity, ease of operation, low cost and high recycling rate, with the overall yield of cutting waste liquid up to 26-46%, of which polyethylene glycol accounts for 20-30%, silicon carbide 5-15% and silicon 1-2%. Moreover, the quality of recycled products can reach or approach the standard indexes, so they can be directly used in solar battery production or other industrial applications. Thus, the promising method of the present invention presents remarkable economic benefits, and also contributes much to environmental protection.

### BRIEF DESCRIPTION OF THE DRAWINGS

In order that the invention may be well understood, some embodiments thereof, which are given by way of example only, will now be described with reference to the drawings, in which:
FIG. 1 is a flow process chart of a recycling and treatment method of mono silicon's cutting waste liquid;
FIG. 2 is a structure diagram of a spray stirrer;
FIG. 3 is an enlarged view of position A in FIG. 2;
FIG. 4 is a structure diagram of a spray mixer;
FIG. 5 is a longitudinal sectional view of sprayer in FIG. 4;
FIG. 6 is a left-side view of a deflector shown in FIG. 5.
FIG. 7 is a structure diagram of a solid-liquid separator;
FIG. 8 is a top view on line A-A direction in FIG. 7.
FIG. 9 is a structure diagram of spray dehydrator; and
FIG. 10 is a structure diagram of a reactor.

### DETAILED DESCRIPTION OF THE EMBODIMENTS

### Embodiment 1

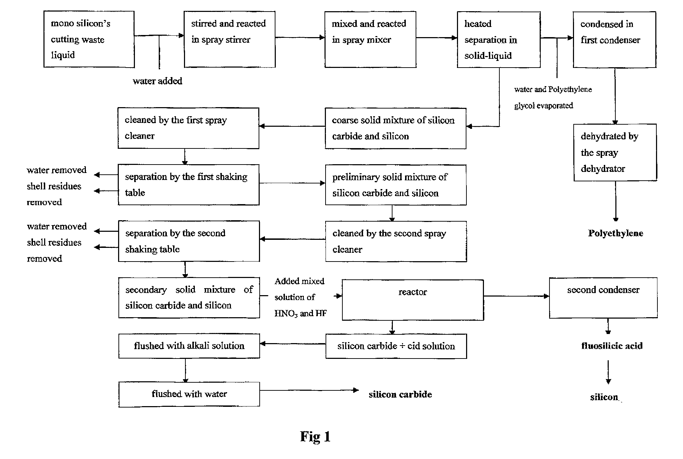

Referring to FIGS. 1 ∼ 6, 50kg mono silicon's cutting waste liquid without kerosene and 10 liter 0.01mol diluted hydrochloric acid are fed into the first mixing kettle 65 of the spray stirrer 49 through the first feed tank 63 and its first feed pipe 69. The first tee valve 62 and first nozzle channel 66 are opened, while the channel to the first discharge pipe 64 is closed, then the first diaphragm pump 61 (a QBY-40 pneumatic diaphragm pump, produced by Shanghai Changquan Pump Manufacture Co.,Ltd) is started, with air pressure of 3kg/cm²; the mixture is discharged from the first discharge hole 67 through the first mixing kettle 65, then fed into a 3mm nozzle 70 of the first spray channel 66 through the first diaphragm pump 61, first pipe 68 and first tee valve 62, and quickly sprayed from the first nozzle exit 73 of the nozzle chamber 72 for mixing in a bigger cycle. As a negative pressure is formed in the nozzle chamber 72 to generate a pressure difference within and outside the wall of the nozzle chamber 72, the external mixture is fed into the nozzle chamber 72 through liquid flow orifice 71 and then mixed in a smaller cycle, thus creating better stirring and reaction effect. Thus, the mixture passes through the first discharge hole 67 at bottom of the first mixing kettle 65, the first diaphragm pump 61 and first nozzle channel 66 to form a circulation loop, enabling 25min circulatory stirring and mixing. Next, the first tee valve 62 and first nozzle channel 66 are closed, and the channel to the first discharge pipe 64 is opened, such that the preliminary mixture is discharged from the first discharge pipe 64 into the spray mixer 50 for mixing. In this way, the preliminary mixture is obtained by the spray stirrer, with its viscosity slightly lower than waste liquid; however, non-uniform liquid and solid powder still exist.

The preliminary mixture is fed into the mixing kettle 3 of the spray mixer 50 through the feed tank 6 and its feed pipe 9; the tee valve 7 and nozzle inlet 10 are opened, while the channel to the discharge pipe 4 is closed, then the diaphragm pump 1 is started; the mixture is discharged from the discharge hole 18 at bottom of the mixing kettle 3, then fed into the nozzle inlet 10 of the sprayer 5 and also into the turbulence channel 11 through the diaphragm pump 1, pipeline 8 and tee valve 7 (when the pump flow is 3 m³/h, the diameter of turbulence channel is 2.4mm, when the mixture's dynamic viscosity is 33.2Pa·S, Reynolds number=8326), with the mixture in a turbulence state. Due to the molecular impact and friction of mixture in the turbulence channel 11, the mixture is further mixed to make the particles finer, then tiny and uniform liquid is sprayed from the turbulence channel 11 to the mixing chamber 12, and ejected from the nozzle exit 13; some mixture passes reversely the small hole 16 on the deflector 15 until reaching out of the mixing chamber 12, such that a pressure difference is generated within and outside the wall of the mixing chamber 12; the mixture passes the liquid flow hole 14 to form a turbulent flow in a small range, creating better stirring and reaction effect. Thus, the mixture passes through the discharge hole 18 at bottom of the mixing kettle 3, the diaphragm pump 1 and sprayer 5 to form a circulation loop, enabling 25min circulatory stirring and mixing with temperature rise to 35°C(the temperature is shown on the temperature indicator 17 after measurement by the resistance thermometer sensor 2). The channel to tee valve 7 and nozzle inlet 10 is closed, whilst the channel to the discharge pipe 4 is opened so as to discharge the secondary mixture from the discharge pipe 4; the viscosity of the sprayed secondary mixture will drop markedly, turning itself into easy-to-flow uniform mixture.

The secondary mixture from the spray mixer is fed into the solid-liquid separator 30 (shown in FIGS. 7 and 8), which mainly comprises: sprinkler head 31, steam pipe 33, tapered plate 42, funneled plate 41 and solid outlet 37. In the solid-liquid separator 30, two electric heating plates are fastened symmetrically onto the outer wall 36; the mixture is sprayed into the solid-liquid separator 30 by the sprinkler head 31 set at the center of top cover, then onto the external layer of the overhead tapered plate 42 of the first electric heating plate, and subsequently onto the inner layer of the lower funneled plate 41 for heating up. Next, the mixture is then fed onto the second electric heating plate through a hole 40 at bottom of the funneled plate 41, and heated up in the same way, when the electric heating plate is maintained at 70°C. After the mixture is heated up, water vapor and polyethylene glycol are evaporated quickly from the steam pipe 33, and then cooled by the first condenser to obtain the mixed solution of water and polyethylene glycol. A small amount of condensed drop on the inner wall of the solid-liquid separator 30 may flow down, and then is discharged from the liquid outlet 38. The solid obtained from heating separation is discharged from the solid outlet 37 at bottom of the solid-liquid separator 30, the effluent is a coarse solid mixture of silicon carbide and silicon, namely, a solid mixture of silicon carbide and silicon containing salt and other impurities. To prevent the coarse solid mixture of silicon carbide and silicon from splashing onto the wall or the liquid drop from inner wall into the solid outlet 37, a baffle plate 39 is set around to make it flow down and discharge from the solid outlet 37.

The mixed solution of water and polyethylene glycol flows into the spray dehydrator 51. Referring to FIG. 9, the spray dehydrator 51 is structured almost the same way with the spray mixer 50; but a drain pipe 21 is set on its top cover. The mixed solution of water and polyethylene glycol flows into the mixing kettle 3' of the spray dehydrator 51 through the feed tank 6' and its feed pipe 9', then the diaphragm pump 1' is started for circulatory spraying dehydration in the same way as in the spray mixer, and the liquid flow is under turbulence state in the turbulence channel 11'; when the circulating flow of the diaphragm pump 1' is 2.5m³/h, the diameter of turbulence channel is 2.0mm; when the dynamic viscosity of the mixed solution of water and polyethylene glycol is 19.2Pa·S, Reynolds number=7319. The circulatory spraying dehydration time is 20 min, and temperature rises to 70 °C; after water is discharged from the drain pipe 21, the channel to the tee valve 7' and nozzle inlet 10' is closed, while the channel to the discharge pipe 4' is opened, so polyethylene glycol is discharged from the discharge pipe 4' to recover 15kg transparent polyethylene glycol, with the molecular weight measured as 205, pH=6.5, moisture content<0.3wt% (molecular weight of standard polyethylene glycol is 300, pH=4-7, moisture content<=0.5wt%), and the recycling rate of polyethylene glycol based on 50kg cutting waste liquid up to 30%.

The coarse solid mixture of silicon carbide and silicon discharged from the solid outlet 37 of the solid-liquid separator 30 is fed into the first spray cleaner, which has the same structure with the spray mixer 50; so the coarse solid mixture of silicon carbide and silicon is also fed into the mixing kettle 3 through the feed tank and its feed pipe, and water up to 15% of the coarse solid mixture is added. Next, the diaphragm pump is started for circulatory spraying cleaning in the same way as in the spray mixer 50, and the mixture is under turbulence state in the turbulence channel; when the circulating flow of the diaphragm pump is 2.1 m³/h, the diameter of the turbulence channel is 2.6mm; when the dynamic viscosity of the mixture of solid mixture and water is 13.5Pa·S, Reynolds number=3979. The circulatory spraying cleaning time is 30 min, and temperature rises to 70 °C, then the cleaned mixture is put into the first shaking table (model: HWY-211, supplied by Shanghai Huayan Instruments Co.,Ltd), so as to separate and remove "shell residues" of smaller specific weight; water is discharged from the groove set on the shaking table to obtain the preliminary solid mixture of silicon carbide and silicon, and then fed into the second spray cleaner, which has the same structure with the first spray cleaner, enabling a circulatory spraying cleaning of solid mixture; when the circulating flow of the diaphragm pump is 3 m³/h, the diameter of the turbulence channel is 2.1mm; when the dynamic viscosity of the mixture is 16.8Pa·S, Reynolds number=8670. The cleaned mixture is put into the second shaking table (model: 350R, provided by Shanghai Huayan Instruments Co.,Ltd), so as to separate and remove "shell residues" and water, and obtain the secondary solid mixture of silicon carbide and silicon. The separated "shell residues" are possibly recovered as fertilizer.

The secondary solid mixture of silicon carbide and silicon is fed into the reactor 52; referring to FIG. 10, the reactor 52 is structured almost the same way with the spray stirrer 49; but a steamed liquid pipe 22 is set on its top cover. The secondary solid mixture of silicon carbide and silicon is fed into the second mixing kettle 65' of the reactor 52 through the second feed tank 63' and its second feed pipe 69', and the mixed acid solution (volume HNO₃: HF=1: 5) of 5%HN0₃ and 30%HF equivalent to solid mixture is added, then the second diaphragm pump 61' is started for 10min circulatory spraying stirring, with the diameter of second nozzle up to 3.5mm; when the temperature reaches the return temperature, fluosilicic acid solution is evaporated from the steamed liquid pipe 22, and cooled by the second condenser to recover a transparent fluosilicic acid solution of 30wt%. The fluosilicic acid solution is normally dried up, then put into mono-silicon furnace crucible to be processed into mono silicon. The mono-silicon furnace crucible is vacuumized, and protective hydrogen is charged, then it is melted by electric heating, and the furnace temperature is maintained about 1420°C with isolated case's cooling water; once upon crystallization, a small mono-silicon block is pulled out as a primer to obtain mono silicon stick and 0.6kg silicon, with a recycling rate based on 50kg cutting waste liquid up to 1.2%. The recycled silicon is subject to Fermi energy measurement: C^{B} =10¹⁵cm⁻³ on Fermi energy diagram means p=5.0 ohm·cm, of which the position of Fermi energy is 0.31ev higher than the center of energy bandgap, 0.24ev lower than the bottom of conduction band, and 0.86ev higher than the top of valence band. According to the measurement, the aforementioned indexes are close to mono silicon. In the reactor 52, the residual silicon carbide and acid solution are discharged and filtered out by the second discharge pipe 64', and flushed with 5wt%Na0H solution and water until pH=7.5, then dried up to recover 7.5kg grayish green silicon carbide powder. It is learnt from analysis that, its purity is 94%, mohs' hardness is 9.5, so the crystal measured by electronic microscope belongs to α-SiC hexagonal system (the purity of standard silicon carbide is 94-99%, mohs' hardness is 9.2-9.6 in α-SiC hexagonal system), with the recycling rate based on 50kg cutting waste liquid up to 15 %.

### Embodiment 2

50kg mono silicon's cutting waste liquid without kerosene and 15 liter 0.001 mol diluted hydrochloric acid are fed into the first mixing kettle 65 of the spray stirrer 49 for 20 min circulatory spraying stirring and reaction. Then, the preliminary mixture is obtained and fed into the spray mixer 50 for 20 min circulatory spraying mixing and reaction, with the temperature rise to 50 ; the mixture is under turbulence state in the turbulence channel 11; when the pump flow is 3m³/h, the diameter of turbulence channel is 1.5mm; when the dynamic viscosity of the mixture is 40 .6Pa·S, Reynolds number=9845. The secondary mixture from the spray mixer is fed into the solid-liquid separator 30, heated up by two electric heating plates at 60 °C, so water vapor and polyethylene glycol are evaporated, then condensed to obtain the mixed solution of water and polyethylene glycol. The coarse solid mixture of silicon carbide and silicon is discharged from the solid outlet 37 at bottom of the solid-liquid separator 30. The mixed solution of water and polyethylene glycol is fed into the spray dehydrator 51 for 15 min circulatory spraying dehydration, with temperature rise to 40 °C, and the liquid flow is under turbulence state in the turbulence channel 11'; when the circulating flow is 2.5m³/h, the diameter of the turbulence channel is 2.5mm; when the dynamic viscosity of the mixed solution of water and polyethylene glycol is 14Pa·S, Reynolds number=5139. After dehydration, 11.9kg transparent polyethylene glycol is obtained, with the recycling rate based on cutting waste liquid up to 23.8%. The coarse solid mixture of silicon carbide and silicon is fed into the first spray cleaner, then water equivalent to 10% of coarse solid mixture is added for circulatory spraying cleaning, and the liquid flow is under turbulence state in the turbulence channel; when the circulating flow is 2.1m³/h, the diameter of the turbulence channel is 2.5mm; when the dynamic viscosity of the mixture of solid mixture and water is 10.2Pa·S, Reynolds number=5925. The circulatory mixing cleaning time is 10 min, and temperature rises to 80 °C. After the cleaned mixture is fed into the first shaking table for separation, the preliminary solid mixture is fed into the second spray cleaner for the same circulatory spraying cleaning; when the circulating flow is 3m³/h, the diameter of the turbulence channel is 1.8mm; when the dynamic viscosity of the mixture is 20.6Pa·S, Reynolds number=11229. The cleaned mixture is put into the second shaking table for separation, thus obtaining secondary solid mixture of silicon carbide and silicon. Next, the secondary solid mixture of silicon carbide and silicon is put into the reactor 52, and the mixed acid solution of HN0₃ and HF equivalent to 1.2 times of solid mixture is added for 10min circulatory spraying stirring, thus recovering 0.8kg silicon from fluosilicic acid solution, with the recycling rate based on cutting waste liquid up to 1.6%. The residue in the reactor is filtered, then flushed with 5wt%KOH solution and water until pH is 7.2, so 5.1kg grayish green silicon carbide powder is obtained, with the recycling rate based on 50kg cutting waste liquid up to 10.2%; the other procedures in this embodiment are the same with those in the embodiment 1.

### Embodiment 3

50kg mono silicon's cutting waste liquid without kerosene and 25 liter 0.0001 mol diluted hydrochloric acid are fed into the first mixing kettle 65 of the spray stirrer 49 for 30 min circulatory spraying stirring and reaction. Then, the preliminary mixture is obtained and fed into the spray mixer 50 for 10 min circulatory spraying mixing and reaction, with the temperature rise to 40°C; the mixture is under turbulence state in the turbulence channel 11; when the pump flow is 3m³/h, the diameter of turbulence channel is 2.5mm; when the dynamic viscosity of the mixture is 28.4Pa·S, Reynolds number=3040. The secondary mixture from the spray mixer is fed into the solid-liquid separator 30, heated up by two electric heating plates at 80 °C, so water vapor and polyethylene glycol are evaporated, then condensed to obtain the mixed solution of water and polyethylene glycol. The coarse solid mixture of silicon carbide and silicon is discharged from the solid outlet 37 at bottom of the solid-liquid separator 30. The mixed solution of water and polyethylene glycol is fed into the spray dehydrator 51 for 40min circulatory spraying dehydration, with temperature rise to 80 °C, and the liquid flow is under turbulence state in the turbulence channel 11'; when the circulating flow is 2.5m³/h, the diameter of the turbulence channel is 1.8mm; when the dynamic viscosity of the mixed solution of water and polyethylene glycol is 21.4Pa·S, Reynolds number=9007. After dehydration, 10.2kg transparent polyethylene glycol is obtained, with the recycling rate based on cutting waste liquid up to 20.4%. The coarse solid mixture of silicon carbide and silicon is fed into the first spray cleaner, then water equivalent to 15% of coarse solid mixture is added for circulatory spraying cleaning, and the liquid flow is under turbulence state in the turbulence channel; when the circulating flow is 2.1m³/h, the diameter of the turbulence channel is 3.0mm; when the dynamic viscosity of the mixture of solid mixture and water is 9.6Pa·S, Reynolds number=3643. The circulatory mixing cleaning time is 30 min, and temperature rises to 70 °C. After the cleaned mixture is fed into the first shaking table for separation, the preliminary solid mixture is fed into the second spray cleaner for the same circulatory spraying cleaning; when the circulating flow is 3m³/h, the diameter of the turbulence channel is 2.4mm; when the dynamic viscosity of the mixture is 14.0Pa·S, Reynolds number=6970. The cleaned mixture is put into the second shaking table for separation, thus obtaining secondary solid mixture of silicon carbide and silicon. Next, the secondary solid mixture of silicon carbide and silicon is put into the reactor 52, and the mixed acid solution of HN0₃ and HF equivalent to 1.5 times of solid mixture is added for 20min circulatory spraying stirring, thus recovering 1kg silicon from the fluosilicic acid solution, with the recycling rate based on cutting waste liquid up to 2%. The residue in the reactor 52 is filtered, then flushed with 10wt% Na0H solution and water until pH is 7.3, so 2.9kg grayish green silicon carbide powder is obtained, with the recycling rate based on 50kg cutting waste liquid up to 5.8%; the other procedures in this embodiment are the same with those in the embodiment 1.

### Embodiment 4

50kg mono silicon's cutting waste liquid without kerosene and 7.5 liter 0.2mol diluted hydrochloric acid are fed into the first mixing kettle 65 of the spray stirrer 49 for 15min circulatory spraying stirring and reaction. Then, the preliminary mixture is obtained and fed into the spray mixer 50 for 20min circulatory spraying mixing and reaction, with the temperature rise to 30°C; the mixture is under turbulence state in the turbulence channel 11; when the pump flow is 3m³/h, the diameter of turbulence channel is 2.0mm; when the dynamic viscosity of the mixture is 35.6Pa·S, Reynolds number=4736. The secondary mixture from the spray mixer is fed into the solid-liquid separator 30, heated up by two electric heating plates at 50 °C, so water vapor and polyethylene glycol are evaporated, then condensed to obtain the mixed solution of water and polyethylene glycol. The coarse solid mixture of silicon carbide and silicon is discharged from the solid outlet 37 at bottom of the solid-liquid separator 30. The mixed solution of water and polyethylene glycol is fed into the spray dehydrator 51 for 15min circulatory spraying dehydration, with temperature rise to 50 °C, and the liquid flow is under turbulence state in the turbulence channel 11'; when the circulating flow is 2.5m³/h, the diameter of the turbulence channel is 3.0mm; when the dynamic viscosity of the mixed solution of water and polyethylene glycol is 11.5Pa·S, Reynolds number=3620. After dehydration, 13.7kg transparent polyethylene glycol is obtained, with the recycling rate based on cutting waste liquid up to 27.4%. The coarse solid mixture of silicon carbide and silicon is fed into the first spray cleaner, then water equivalent to 20% of coarse solid mixture is added for circulatory spraying cleaning, and the liquid flow is under turbulence state in the turbulence channel; when the circulating flow is 2.1m³/h, the diameter of the turbulence channel is 2.7mm; when the dynamic viscosity of the mixture of solid mixture and water is 11.2Pa·S, Reynolds number=4283. The circulatory mixing cleaning time is 20 min, and temperature rises to 50 . After the cleaned mixture is fed into the first shaking table for separation, the preliminary solid mixture is fed into the second spray cleaner for the same circulatory spraying cleaning; when the circulating flow is 3m³/h, the diameter of the turbulence channel is 3.0mm; when the dynamic viscosity of the mixture is 16.8Pa·S, Reynolds number=4626. The cleaned mixture is put into the second shaking table for separation, thus obtaining secondary solid mixture of silicon carbide and silicon. Next, the secondary solid mixture of silicon carbide and silicon is put into the reactor 52, and the mixed acid solution of HN0₃ and HF equivalent to 1.1 times of solid mixture is added for 30min circulatory spraying stirring, thus recovering 0.5kg silicon from the fluosilicic acid solution, with the recycling rate based on cutting waste liquid up to 1%. The residue in the reactor 52 is filtered, then flushed with 7wt%KOH solution until pH is 7, so 6.3kg grayish green silicon carbide powder is obtained, with the recycling rate based on 50kg cutting waste liquid up to 12.6%; the other procedures in this embodiment are the same with those in the embodiment 1.

## Claims

1. A recycling and treatment method of waste liquid in cutting mono silicon, which includes the following steps:
i. put mono silicon's cutting waste liquid without kerosene into a spray stirrer, and add hydrochloric acid with a concentration of 0.0001-0.4 mol by a ratio of 1kg waste liquid to 100-500 ml hydrochloric acid solution; then stir 10-30 minutes to obtain the preliminary mixture, discharge into a spray mixer, then mix 10-30minutes with temperature rise to 30-50°C, and finally obtain the secondary mixture and discharge it;
ii. secondary mixture discharged from spray mixer is fed into a solid-liquid separator, and heated by an electric heating plate of 50-80°C, so as to evaporate and condense it to obtain the mixed solution of water and Polyethylene glycol; then, mixed solution is fed into the spray dehydrator, and dehydrated for 15-40 minutes at 40-80°C; polyethylene glycol can be recovered by discharging water; coarse solid mixture of silicon carbide and silicon is discharged from the bottom of solid-liquid separator;
iii. coarse solid mixture of silicon carbide and silicon is fed into the first spray cleaner, then cleaned for 10-30 min by adding water equivalent to 10-20% of coarse solid mixture; after the temperature rises to 40-80°C, the cleaned mixture is put into the first shaking table to separate and remove "shell residues", thus obtaining the preliminary solid mixture of silicon carbide and silicon; then, the solid mixture is fed into the second spray cleaner for the same cleaning process, and next put into the second shaking table to separate and remove again the "shell residues", thus obtaining the secondary solid mixture of silicon carbide and silicon;
iv. secondary solid mixture of silicon carbide and silicon is fed into a reactor, and the mixed acid solution of 5% HNO₃ and 30% HF, with a volume ratio of HNO₃: HF=1: 5, is added by a ratio of 1-1.5 kg mixed acid solution to 1kg secondary solid mixture; through 10-30 min stirring, the fluosilicic acid solution is vaporized when temperature rises to the counterflow temperature, and then condensed to recover transparent fluosilicic acid solution; the fluosilicic acid solution is finally processed into silicon; residual silicon carbide and acid solution in the reactor is filtered and flushed with alkali solution until pH reaches 7-7.5, and then dried up to recover silicon carbide.

2. A method as claimed in claim 1, wherein said alkali solution in 4^{th} step is a 5-10wt% alkali solution prepared by NaOH, KOH or Na₂CO₃.

3. Apparatus for recycling and treatment method of waste liquid in cutting mono silicon comprising:
a spray stirrer, consisting of: first mixing kettle, first feed tank, first spray channel, first diaphragm pump, first tee valve and first discharge pipe; a first feed pipe at lower part of said first feed tank is mounted onto the upper cover of the first mixing kettle, and also extended into the first mixing kettle; said first spray channel consists of interconnected nozzle, nozzle chamber and first nozzle exit; a liquid flow orifice is set separately onto both sides of the wall of nozzle chamber, with the diameter of nozzle about 3-4 mm; said first diaphragm pump is arranged on the first connecting pipe between the first tee valve and the first discharge hole at bottom of the first mixing kettle, while the first discharge pipe is connected with the first tee valve;
a spray mixer, connected with the said spray stirrer via the first discharge pipe of the spray stirrer; the spray mixer mainly consists of: a third mixing kettle, third feed tank, third sprayer, third diaphragm pump, first resistance thermometer sensor, third tee valve and third discharge pipe; the third feed pipe at lower part of said third feed tank is mounted onto the upper cover of the third mixing kettle, and also extended into the third mixing kettle; said third sprayer consists of: the third spray channel and first deflector; the third spray channel consists of interconnected third nozzle inlet, first turbulence channel, first mixing chamber and third nozzle exit; the third nozzle inlet is of a funnel shape, and the first turbulence channel has a diameter of 1.2-3 mm; a liquid flow hole is set separately onto both sides of the wall of the first mixing chamber; the first deflector is vertically arranged on the third spray channel, and located between the first liquid flow hole and third nozzle exit; small holes are distributed onto the first deflector; said third diaphragm pump is arranged on the third connecting pipe between the third tee valve and third discharge hole at bottom of the third mixing kettle, while the third discharge pipe is connected with the third tee valve; said first resistance thermometer sensor is located fixedly into the third mixing kettle, and connected with the first temperature indicator by wiring the upper cover of the third mixing kettle;
a solid-liquid separator comprising: a sprinkler head, steam pipe, tapered plate, funneled plate and solid outlet; the third discharge pipe of the spray mixer is connected with the sprinkler head set at the center of top cover of the solid-liquid separator; in the solid-liquid separator, two electric heating plates are fastened symmetrically onto the outer wall; every electric heating plate is structured in a way that: a tapered plate is located at the upper part, and a funneled plate and hole located at lower part; the diameter of the funneled plate is bigger than that of the tapered plate; the tapered plate is fastened onto three locating pins arranged in 120°, all of which are fixed onto the outer wall; the funneled plate is fastened onto the tray, which is fixed onto the outer wall via fix screw; a steam pipe is set on the top cover, and a solid outlet at the bottom; a baffle plate is set on the periphery of the solid outlet, and a liquid outlet also set at the bottom;
a spray dehydrator, which is structured almost the same way with the said spray mixer, but a drain pipe is set on its top cover; in this device, the solid-liquid separator is connected with the spray dehydrator via the first condenser; the spray dehydrator structurally comprises: the fourth mixing kettle, the fourth feed tank, the fourth sprayer, the fourth diaphragm pump, the second resistance thermometer sensor, the fourth tee valve, the fourth discharge pipe and drain pipe; the fourth feed pipe at lower part of the fourth feed tank is mounted onto the upper cover of the fourth mixing kettle, and also extended into the fourth mixing kettle; a drain pipe is set on the upper cover of the fourth mixing kettle; said fourth sprayer consists of the fourth spray channel and the second deflector; the fourth spray channel consists of interconnected fourth nozzle inlet, second turbulence channel, second mixing chamber and fourth nozzle exit; the fourth nozzle inlet is of a funnel shape, and the second turbulence channel has a diameter of 1.2-3 mm; a second liquid flow hole is set separately onto both sides of the wall of the second mixing chamber; the second deflector is vertically arranged on the fourth spray channel, and located between the second liquid flow hole and fourth nozzle exit; small holes are distributed onto the second deflector; said fourth diaphragm pump is arranged on the fourth connecting pipe between the fourth tee valve and fourth discharge hole at bottom of the fourth mixing kettle, while the fourth discharge pipe is connected with the fourth tee valve; the second resistance thermometer sensor is located fixedly into the fourth mixing kettle, and connected with the second temperature indicator by wiring the upper cover of the fourth mixing kettle;
a first spray cleaner, connected with the solid outlet of the solid-liquid separator; the first spray cleaner is structured in the same way with the spray mixer, namely, the first spray cleaner is connected with the first shaking table, the second spray cleaner and the second shaking table; of which the second spray cleaner is structured in the same way with the first spray cleaner, and also connected with the reactor;
a reactor, which is structured almost the same way with the said spray stirrer, but a steamed liquid pipe is set on its top cover; in this device, the steamed liquid pipe is connected with the second condenser;
the reactor structurally comprises: a second mixing kettle, second feed tank, second spray channel, second diaphragm pump, second tee valve, second discharge pipe and steamed liquid pipe; the second feed pipe at lower part of said second feed tank is mounted onto the upper cover of the second mixing kettle, and also extended into the second mixing kettle; a steamed liquid pipe is also set on the upper cover of the second mixing kettle; said second spray channel consists of interconnected second nozzle, second nozzle chamber and second nozzle exit; a liquid flow orifice is set separately onto both sides of the wall of the nozzle chamber, while the second nozzle has a diameter of 3-4mm; said second diaphragm pump is arranged on the second connecting pipe between the second tee valve and second discharge hole at bottom of the second mixing kettle, while the second discharge pipe is connected with the second tee valve.

4. Apparatus as claimed in claim 3, wherein small holes of 1-3mm are distributed on the first deflector in the said spray mixer, with the aperture ratio of the first deflector up to 60-80%.

5. Apparatus as claimed in claim 3 or 4, wherein small holes of 1-3mm are distributed on the second deflector in the said spray mixer, with the aperture ratio of the second deflector up to 60-80%.

6. A method of recycling and treating waste liquid that has been used in cutting mono silicon, said method comprising:
i) treating said waste liquid with diluted hydrochloric acid to obtain a flowable mixture;
ii). heating said mixture for solid-liquid separation such that water and polyethylene glycol are evaporated, condensed and dehydrated to recover the polyethylene glycol, and a mixture of silicon carbide and silicon solids is obtained;
iii) cleaning said solids with water; and
4. treating said cleaned solids with an acid solution comprising HN0₃ +HF to recover said silicon carbide and silicon.

7. A method as claimed in claim 6, wherein said hydrochloric acid is mixed with said waste liquid with a concentration of 0.0001-0.4 mol by a ratio of 1kg waste liquid to 100-500 ml hydrochloric acid.

8. A method as claimed in claim 6 or 7, wherein said acid solution comprises 5% HNO₃ and 30% HF, with a volume ratio of HNO₃: HF=1: 5.

9. A method as claimed in claim 7, wherein said cleaned solids are treated by adding said acid solution at a ratio of 1-1.5 kg acid solution to 1kg of cleaned solids.

10. A method as claimed in any one of claims 6 to 9, wherein said in said fourth step a residue of said silicon carbide solids and acid solution is treated to obtain a ph of 7 to 7.5 and then dried to recover said silicon carbide.

11. A method as claimed in any one of claims 6 to 10, wherein in said fourth step fluosilicic acid is processed to recover said silicon.

12. A method as claimed in any one of claims 6 to 11, wherein said third step includes shaking said solids with a least one shaking table.

13. A method as claimed in any one of claims 6 to 12, wherein said second step includes heating said mixture to between 50 and 80°C to separate a solution of said water and polyethylene glycol from said mixture of solids.

14. A method as claimed in claim 13, wherein said separated solution of water and polyethylene glycol is dehydrated at a temperature between 40 and 80°C to recover said polyethylene glycol.

15. An apparatus operated to perform a method as claimed in anyone of claims 6 to 14, said apparatus comprising a mixing apparatus in which said first step is performed, a solids-liquid separating and dehydrating apparatus in which said second step is performed, spray cleaning apparatus for performing said cleaning of solids with water and a reactor in which said fourth step is performed.
